(19) **Europäisches Patentamt**
**European Patent Office**
**Office européen des brevets**

(11) **EP 4 746 505 A1**

(12) **EUROPEAN PATENT APPLICATION**
published in accordance with Art. 153(4) EPC

(43) Date of publication:
**20.05.2026 Bulletin 2026/21**

(51) International Patent Classification (IPC):
**H04W 28/06** (2009.01)    **H04W 4/38** (2018.01)

(21) Application number: **23944709.7**

(52) Cooperative Patent Classification (CPC):
**H04W 4/38; H04W 28/06**

(22) Date of filing: **12.07.2023**

(86) International application number:
**PCT/CN2023/107093**

(87) International publication number:
**WO 2025/010689 (16.01.2025 Gazette 2025/03)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **GUANGDONG OPPO MOBILE TELECOMMUNICATIONS CORP., LTD.**
**Dongguan, Guangdong 523860 (CN)**

(72) Inventors:
• **XU, Jing**
  **Dongguan, Guangdong 523860 (CN)**
• **LIN, Yanan**
  **Dongguan, Guangdong 523860 (CN)**
• **LIANG, Bin**
  **Dongguan, Guangdong 523860 (CN)**

(74) Representative: **RGTH Patentanwälte PartGmbB**
**Mönckebergstraße 11**
**20095 Hamburg (DE)**

(54) **SENSING INFORMATION SENDING METHOD AND APPARATUS, SENSING INFORMATION RECEIVING METHOD AND APPARATUS, AND DEVICE AND STORAGE MEDIUM**

(57)    A sensing information sending method and apparatus, a sensing information receiving method and apparatus, and a device and a storage medium, which relate to the technical field of communications. The sensing information sending method comprises: a first node sending sensing information, which is within a valid interval (410). A valid interval of sensing information is constrained, such that a sensing node transmits sensing information, which is within the valid interval, and may not have to send sensing information, which is not within the valid interval, so as to avoid feeding all sensing information back all the time. This cannot only facilitate reducing the processing complexity and power consumption of the sensing node, but may also reduce the amount of feedback, thereby saving on transmission resources, and improving the transmission efficiency of sensing information.

> A first node transmits sensing information within an effective interval    410

FIG. 4

**Description**

## TECHNICAL FIELD

Embodiments of the present disclosure relate to the field of communication technology, and in particular, to a method and apparatus for transmitting sensing information, a method and apparatus for receiving sensing information, a device, and a storage medium.

## BACKGROUND

Communication-sensing integration refers to integration of two functions of communication and sensing, causing future communication systems to have both communication and sensing functions.

In a sensing system, a sensing node (e.g., a receiving node of a sensing signal) may receive the sensing signal, obtain sensing information according to the sensing signal, and feed the sensing information back to a node in the sensing system responsible for processing the sensing information.

If the sensing node feeds back all the obtained sensing information, the feedback amount will be excessive, and transmission resources will be wasted.

## SUMMARY

Embodiments of the present disclosure provide a method and apparatus for transmitting sensing information, a method and apparatus for receiving sensing information, a device, and a storage medium. The technical solutions are as follows.

According to an aspect of the embodiments of the present disclosure, a method for transmitting sensing information is provided; the method is performed by a first node and the method includes:

transmitting sensing information within an effective interval, where the effective interval includes an effective range of at least one parameter related to the sensing information.

According to another aspect of the embodiments of the present disclosure, a method for receiving sensing information is provided; the method is performed by a second node and the method includes:

receiving sensing information within an effective interval, where the effective interval includes an effective range of at least one parameter related to the sensing information.

According to yet another aspect of the embodiments of the present disclosure, an apparatus for transmitting sensing information is provided; the apparatus includes: a transmitting module configured to transmit sensing information within an effective interval, where the effective interval includes an effective range of at least one parameter related to the sensing information.

According to yet another aspect of the embodiments of the present disclosure, an apparatus for receiving sensing information is provided; the apparatus includes: a receiving module configured to receive sensing information within an effective interval, where the effective interval includes an effective range of at least one parameter related to the sensing information.

According to yet another aspect of the embodiments of the present disclosure, a device is provided; the device includes a processor and a memory, where a computer program is stored in the memory, and the processor performs the computer program to perform the method for transmitting sensing information or the method for receiving sensing information.

According to yet another aspect of the embodiments of the present disclosure, a computer-readable storage medium is provided, where a computer program is stored in the storage medium, and the computer program is configured to be performed by a processor to perform the method for transmitting sensing information or the method for receiving sensing information.

According to yet another aspect of the embodiments of the present disclosure, a chip is provided; the chip includes a programmable logic circuit and/or program instructions, and when operating, the chip is configured to perform the method for transmitting sensing information or the method for receiving sensing information.

According to yet another aspect of the embodiments of the present disclosure, a computer program product is provided; the computer program product includes computer programs, the computer programs are stored in a computer-readable storage medium, and a processor reads the computer programs from the computer-readable storage medium and performs the computer programs to perform the method for transmitting sensing information or the method for receiving sensing information.

The technical solutions provided by the embodiments of the present disclosure may bring the following beneficial effects:

by constraining an effective interval of sensing information, a sensing node transmits sensing information within the effective interval, while sensing information outside the effective interval does not need to be transmitted, thereby avoiding always feeding back the full amount of sensing information, which not only helps to reduce the processing complexity and power consumption of the sensing node, but also reduces the feedback amount, saves transmission resources, and improves the transmission efficiency of sensing information.

## BRIEF DESCRIPTION OF THE DRAWINGS

FIG. 1 is a schematic diagram of a network architecture provided by an embodiment of the present disclosure;
FIG. 2 is a schematic diagram of 8 sensing modes provided by embodiments of the present disclosure;

FIG. 3 is a schematic diagram of a sensing system including multiple sensing nodes provided by embodiments of the present disclosure;

FIG. 4 is a flowchart of a method for transmitting sensing information provided by an embodiment of the present disclosure;

FIG. 5 is a schematic diagram of statistical results of a distribution of line-of-sight probability with distance in various scenarios provided by an embodiment of the present disclosure;

FIG. 6 is a schematic diagram illustrating a relationship between flight time and distance of a signal provided by an embodiment of the present disclosure;

FIG. 7 is a flowchart of a method for receiving sensing information provided by an embodiment of the present disclosure;

FIG. 8 is a schematic diagram illustrating phase variation of respiratory detection over time provided by an embodiment of the present disclosure;

FIG. 9 is a schematic diagram of phase spectrum analysis of respiratory detection provided by an embodiment of the present disclosure;

FIG. 10 is a block diagram of an apparatus for transmitting sensing information provided by an embodiment of the present disclosure;

FIG. 11 is a block diagram of an apparatus receiving sensing information provided by an embodiment of the present disclosure; and

FIG. 12 is a schematic structural diagram of a device provided by an embodiment of the present disclosure.

## DETAILED DESCRIPTION

To make the objectives, technical solutions and advantages of the present disclosure clearer, implementations of the present disclosure will be further described in detail below with reference to the accompanying drawings.

The network architecture and service scenarios described in the embodiments of the present disclosure are intended to more clearly illustrate the technical solutions of the embodiments of the present disclosure, and do not constitute a limitation on the technical solutions provided by the embodiments of the present disclosure. A person skilled in the art will appreciate that, with the evolution of the network architecture and the emergence of new service scenarios, the technical solutions provided by the embodiments of the present disclosure are equally applicable to similar technical problems.

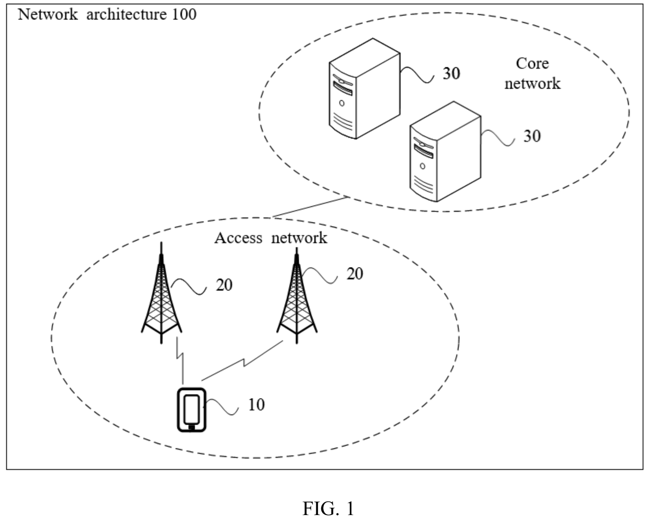

Referring to FIG. 1, which shows a schematic diagram of a network architecture 100 provided by an embodiment of the present disclosure, the network architecture 100 may include: a terminal device 10, an access network device 20 and a core network element 30.

The terminal device 10 may refer to a user equipment (UE), an access terminal, a user unit, a user station, a mobile station, a mobile platform, a remote station, a remote terminal, a mobile device, a wireless communication device, a user agent, or a user device. In some embodiments, the terminal device 10 may also be a cellular phone, a cordless phone, a session initiation protocol (SIP) phone, a wireless local loop (WLL) station, a personal digital assistant (PDA), a handheld device with a wireless communication function, a computing device or other processing devices connected to a wireless modem, a vehicle-mounted device, a wearable device, a terminal device in a 5th generation system (5GS) or a terminal device in a future evolved public land mobile network (PLMN), or the like, which is not limited in the embodiments of the present disclosure. For the convenience of description, the devices mentioned above are collectively referred to as terminal devices. There are usually multiple terminal devices 10, and one or more terminal devices 10 may be distributed in a cell managed by each access network device 20. The terminal device may also be referred to as a terminal or UE for short, and those skilled in the art will understand its meaning.

The access network device 20 is a device deployed in the access network to provide wireless communication functions for the terminal device 10. The access network device 20 may include various forms of macro base stations, micro base stations, relay stations, access points, etc. In systems using different wireless access technologies, the name of the device with access network device function may be different; for example, in a 5G new radio (NR) system, the device is called next generation node B (gNodeB or gNB). As communication technology evolves, the name "access network device" may change. For the convenience of description, in the embodiments of the present disclosure, the above-mentioned devices that provide wireless communication functions for the terminal device 10 are collectively referred to as access network devices. In some embodiments, a communication relationship may be established between the terminal device 10 and the core network element 30 through the access network device 20. For example, in a long term evolution (LTE) system, the access network device 20 may be an evolved universal terrestrial radio access network (EUTRAN) or one or more evolved NodeBs (eNodeBs) in the EUTRAN; in the 5G NR system, the access network device 20 may be a radio access network (RAN) or one or more gNBs in the RAN. In the embodiments of the present disclosure, unless otherwise specified, the term "network device" refers to the access network device 20, such as a base station.

The core network element 30 is a network element deployed in the core network. The functions of the core network element 30 are mainly to provide user connection, user management and service carrying, and to provide an interface for an external network as a bearer network. For example, the core network element in the 5G NR system may include an access and mobility management function (AMF) entity, a user plane function (UPF) entity, a session management function (SMF) entity, and other network elements.

In some embodiments, the access network device 20 and the core network element 30 communicate with each other via a certain air interface technology, such as an NG interface in the 5G NR system. The access network device 20 and the terminal device 10 communicate with each other via a certain air interface technology, such as a Uu interface.

The "5G NR system" in the embodiments of the present disclosure may also be referred to as a 5G system or an NR system, but those skilled in the art may understand its meaning. The technical solutions described in the embodiments of the present disclosure may be applicable to LTE systems, 5G NR systems, subsequent evolution systems of 5G NR systems (e.g., sixth generation mobile communication (6th Generation, 6G) systems), and other communication systems such as narrow band internet of things (NB-IoT) systems, which is not limited in the embodiments of the present disclosure.

In the embodiments of the present disclosure, the network device may provide a service for a cell, and the terminal device communicates with the network device via a transmission resource (e.g., a frequency domain resource, or a spectrum resource) on a carrier used by the cell. The cell may be a cell corresponding to the network device (e.g., a base station). The cell may belong to a macro base station or may also belong to a base station corresponding to a small cell. The small cell here may include: a metro cell, a micro cell, a pico cell, a femto cell, or the like, these small cells have characteristics of small coverage range and low transmission power, which are applicable for providing a data transmission service with high speed.

Communication-sensing integration refers to integration of two functions of communication and sensing, causing future communication systems to have both communication and sensing functions. While transmitting information via a wireless channel, the system actively recognizes and analyzes channel characteristics to sense physical characteristics of the surrounding environment, thereby enhancing the communication and sensing functions. For example, by using base station signals to sense surrounding environment information and design communication links, obstacles may be avoided and communication performance may be improved.

The next generation of networks (e.g., 6G networks) is expected to be a fusion of mobile communication networks, sensing networks and computing power networks. In a narrow sense, a sensing network refers to a system with the capabilities of target positioning (ranging, speed, and angle measurement), target imaging, target detection, target tracking, and target recognition. In a broad sense, a sensing network refers to a system having the attributes and status of all services, networks, users and terminals, as well as environmental objects. From the perspective of sensing applications, sensing may be classified into the following categories:

outdoor, wide-area or local-area applications, including smart cities (e.g., weather monitoring), smart transportation/high-speed rail (e.g., high-precision map construction, road supervision, intrusion detection), and low-altitude applications (e.g., drone monitoring and obstacle avoidance, flight intrusion detection, flight path management); and

indoor or local-area applications, including smart home and health management (e.g., respiratory monitoring, intrusion detection, gesture/posture recognition, motion monitoring, mobile trajectory tracking), and smart factories (e.g., intrusion detection, material detection, object defect detection, etc.).

The above is merely exemplary, and some classifications of sensing applications are provided, and the sensing application areas are not limited to the above examples.

Wireless communication and sensing are two important applications of modern radio frequency technologies. Sensing detects parameters of a physical environment by using radio waves to implement environmental sensing such as target positioning, action recognition, and imaging. Traditional sensing and wireless communication exist independently, and the separated design has a waste of wireless spectrum and hardware resources. After entering beyond 5G (B5G) and 6G era, the communication spectrum has moved towards millimeter wave, terahertz, and visible light communication. In the future, the spectrum of wireless communication will overlap with the traditional sensing spectrum. The communication-sensing integration technology integrates the two functions of wireless communication and sensing. Thus, it may be possible to implement the sensing function by using wireless resources of wireless communication, implement sensing services in a large range by using widely deployed cellular networks, and perform joint sensing by using a base station and multiple terminals to implement high sensing accuracy. In addition, it may be possible to implement sensing functions by reusing hardware modules of wireless communication, so as to reduce costs. In short, the communication-sensing integration technology enables future wireless communication systems to have sensing capabilities, providing a foundation for the development of future smart transportation, smart cities, smart factories, drones and other services.

The "sensing" mentioned in the embodiments of the present disclosure refers to a process of directly or indirectly obtaining sensing information of a target or environment based on at least one sensing signal of acoustic waves, electromagnetic waves, or light waves (including but not limited to lasers). For example, by transmitting and receiving sensing signals and measuring or processing the sensing signals in other ways, sensing information of the sensing target or environment is obtained, so as to achieve, for example, positioning, ranging, speed measurement, angle measurement, target imaging, target detection, target tracking, target recognition and other services.

In addition, the term "sensing" mentioned in the embodiments of the present disclosure may also be replaced by any other terms that may express sensing-related meanings, such as positioning, ranging, speed measurement, angle measurement, target imaging, target detection, target tracking and target recognition.

Nodes involved in sensing are as follows:

sensing transmitting node: a node that transmits sensing signals;
sensing receiving node: a node that receives sensing signal;
sensing node: sensing transmitting node and sensing receiving node being collectively referred to as a sensing node, i.e., a node that performs sensing;
sensing management node: a node that manages and controls a sensing task, where the sensing management node configures a sensing task for a sensing node, and the sensing node feeds back a sensing result to the sensing management node after performing sensing; and
sensing trigger node: a node that initiates sensing, sets a configuration of a sensing scenario, and parses a sensing feedback transmitted by the sensing node.

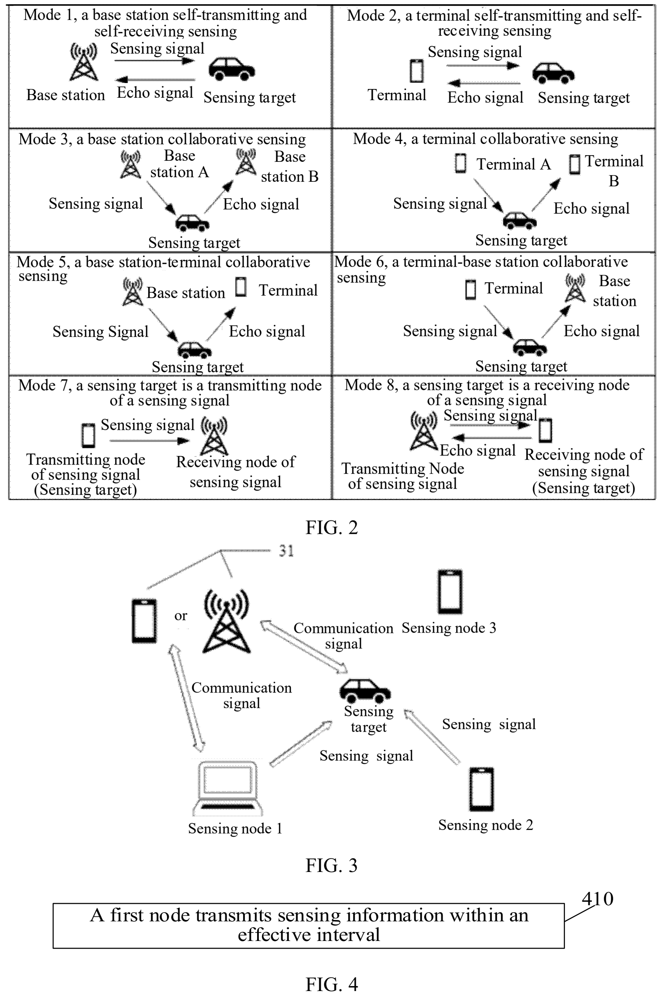

For sensing, there may be 8 modes as shown in FIG. 2.

Mode 1, a base station self-transmitting and self-receiving sensing: a base station transmitting a sensing signal and receiving an echo signal. In mode 1, the sensing transmitting node and the sensing receiving node are a same base station. That is, the base station transmits a sensing signal to a sensing target, and after the sensing signal is reflected by the sensing target, the same base station receives an echo signal (i.e., the sensing signal after being reflected by the sensing target).

Mode 2, a terminal self-transmitting and self-receiving sensing: a terminal transmitting a sensing signal and receiving an echo signal. In mode 2, the sensing transmitting node and the sensing receiving node are a same terminal. That is, the terminal transmits a sensing signal to a sensing target, and the sensing signal is reflected by the sensing target and then received by the same terminal as an echo signal.

Mode 3, a base station collaborative sensing: a base station (e.g., a base station A in the figure) transmitting a sensing signal, and another base station (e.g., a base station B in the figure) receiving an echo signal. In mode 3, the sensing transmitting node and the sensing receiving node are different base stations. That is, a base station transmits a sensing signal to a sensing target, and after the sensing signal is reflected by the sensing target, another base station receives an echo signal.

Mode 4, a terminal collaborative sensing, a terminal (e.g., a terminal A in the figure) transmitting a sensing signal, and another terminal (e.g., a terminal B in the figure) receiving an echo signal. In mode 4, the sensing transmitting node and the sensing receiving node are different terminals. That is, a terminal transmits a sensing signal to a sensing target, and after the sensing signal is reflected by the sensing target, another terminal receives an echo signal.

Mode 5, a base station-terminal collaborative sensing: a base station transmitting a sensing signal, and a terminal receiving an echo signal. In mode 5, the sensing transmitting node is the base station, and the sensing receiving node is the terminal. That is, the base station transmits a sensing signal to a sensing target, and the sensing signal is reflected by the sensing target, and then received by the terminal as an echo signal.

Mode 6, a terminal-base station collaborative sensing: a terminal transmitting a sensing signal, and a base station receiving an echo signal. In mode 6, the sensing transmitting node is the terminal, and the sensing receiving node is the base station. That is, the terminal transmits a sensing signal to a sensing target, and the sensing signal is reflected by the sensing target, and then received by the base station as an echo signal.

Mode 7, a sensing target being a transmitting node of a sensing signal. In mode 7, the sensing transmitting node is a terminal, and the sensing receiving node is a base station. Since a sensing target (e.g., the terminal) is the sensing transmitting node, the sensing signal is transmitted from the sensing transmitting node (e.g., the terminal) to the sensing receiving node (e.g., the base station) without reflection and may be directly parsed by the base station after being received.

Mode 8, a sensing target being a receiving node of a sensing signal. In mode 8, the sensing transmitting node is a base station, and the sensing receiving node is a terminal. Since the sensing target (e.g., the terminal) is a sensing receiving node, after receiving the sensing signal, the terminal needs to feed back a sensing result to the base station to enable the base station to obtain the sensing result.

The transmitting node and the receiving node of the sensing signal may be collectively referred to as the sensing node. In the above 8 sensing modes, there is only one or a pair of sensing nodes. In wireless communication systems, there are a large number of terminal devices (e.g., mobile phones or internet of things (IoT) devices). In a case where there are multiple sensing nodes (i.e., base stations, mobile phones, or IoT devices that capable of transmitting and/or receiving sensing signals) around a sensed object, the joint participation of the multiple sensing nodes in sensing will improve the accuracy of sensing, meet complex sensing service requirements, and provide rich sensing services. As shown in FIG. 3, in a case where there are multiple sensing nodes in a system (e.g., a sensing node 1, sensing node 2, and sensing node 3 in FIG. 3), a sensing control node 31 may exist to control and manage an entire sensing service to improve efficiency. The sensing control node 31 may be a base station, a terminal device, or a core network element.

Referring to FIG. 4, which shows a flowchart of a method for transmitting sensing information provided by an embodiment of the present disclosure. The method may include a following step 410.

In step 410, a first node transmits sensing information within an effective interval.

In some embodiments, the first node is a sensing node in a sensing system, and is configured to transmit and/or receive sensing signals. In some embodiments, the first node may be an access network device (e.g., a base station), or a terminal device. In the embodiments of the present disclosure, there is no limitation on which device used to implement the first node. Exemplarily, for the sensing system shown in FIG. 3, the first node may be a sensing node.

In some embodiments, the first node obtains the sensing information based on the sensing signal. In some embodiments, the first node receives the sensing signal, obtains sensing information according to the received sensing signals, and then transmits the sensing information. The sensing information mentioned in the present disclosure may also be referred to as a sensing result, a measurement result, a feedback result, a sensing feedback amount, sensing feedback information, etc., which is not limited in the embodiments of the present disclosure. In addition, the "transmitting sensing information" mentioned in the present disclosure may also be referred to as feeding back sensing information, and the two express the same meaning.

In some embodiments, the first node transmits the sensing information within the effective interval to a second node. The second node may be a node in the sensing system for collecting and/or processing sensing information. In some embodiments, the second node may be any one of: an access network device (e.g., a base station), a terminal device, a server, a core network element, or a sensing information collector. In the embodiments of the present disclosure, there is no limitation on which device is used to implement the second node. Exemplarily, for the sensing system shown in FIG. 3, the second node may be the sensing control node.

The method provided by the embodiments of the present disclosure is applicable to any sensing mode, including but not limited to any one of the 8 sensing modes shown in FIG. 2. For the self-transmitting and self-receiving sensing mode, such as modes 1 and 2, the transmitting node and the receiving node of the sensing signal may be a same node; for the non-self-transmitting and non-self-receiving sensing mode, such as modes 3 to 8, the sending node and the receiving node of the sensing signal may be different nodes.

For the sensing information obtained by the first node based on the received sensing signals, the sensing information may all be within the effective interval, or part of the sensing information may be within the effective interval while the other part is not within the effective interval, or all of the sensing interval may not be within the effective interval. In the embodiments of the present disclosure, after obtaining the sensing information, the first node may determine whether the sensing information is within the effective interval, and the first node transmits the sensing information within the effective interval. In other words, the first node does not need to transmit the sensing information that is not within the effective interval, thereby saving transmission resources required for transmitting the sensing information.

In some embodiments, the effective interval may be a range of values or a set of one or more values. The effective interval may be set for at least one parameter related to the sensing information.

In some embodiments, the effective interval includes an effective interval of at least one parameter related to the sensing information.

In some embodiments, the at least one parameter includes at least one of: di a distance, a delay, a time, intensity, an amplitude, an angle, an azimuth, a speed, a frequency shift, a phase, a frequency, or a period. The present disclosure includes but is not limited to the aforementioned parameters, and may also include other parameters.

In some embodiments, the distance may refer to a distance between the first node and the sensing target. An effective range of the distance may include one or more ranges of distance values. The value range may be a range between two threshold values, for example, the value range is greater than a first threshold value and less than a second threshold value. Alternatively, the value range may be greater than or less than a certain threshold value, or the value range may be a set of one or more values.

Exemplarily, considering a coverage radius of cellular network, an upper limit value of the effective range of the distance may be set to 200 meters (m) or 500 m. However, considering the altitude, the upper limit altitude may also be set to 250 m or 550 m. For terminal devices or small stations with small coverage, the upper limit of the effective range may be set to 10 m or 20 m.

For example, the first node is a base station, the sensing target is a drone, and the base station detects a distance to the drone. Considering the flight altitude limit of the drone and the coverage range of the base station, the distance between the drone and the base station is within a certain range, such as 20 m to 200 m. For this scenario, the effective range of distance may be configured as [20 m, 200 m].

For example, considering the effectiveness of the sensing information, it is necessary to ensure that the echo signal is a direct path (also referred to as a line-of-sight (LoS) path). However, as the sensing distance increases, the probability that the echo signal is a direct path decreases. Therefore, in order to ensure that the sensing information is obtained based on the direct path, the sensing distance is required to be constrained, i.e., the effective range of the distance is less than or equal to 20 m. In some embodiments, the effective range of distance varies with the sensed environment. For example, for indoor environments or Urban Micro areas, due to the presence of a large number of obstacles, there is a high probability that a direct path exists within 20 m. Therefore, for indoor environments or Urban Micro areas, the effective range of distance may be less than or equal to 20 m. For open suburban scenes, there is a high probability that a direct path exists within 200 m. Therefore, for open suburban scenes, the effective range of distance may be less than or equal to 200 m. Therefore, the effective range of distance may be configured according to the scene, and the effective range of distance corresponding to different scenes may be different.

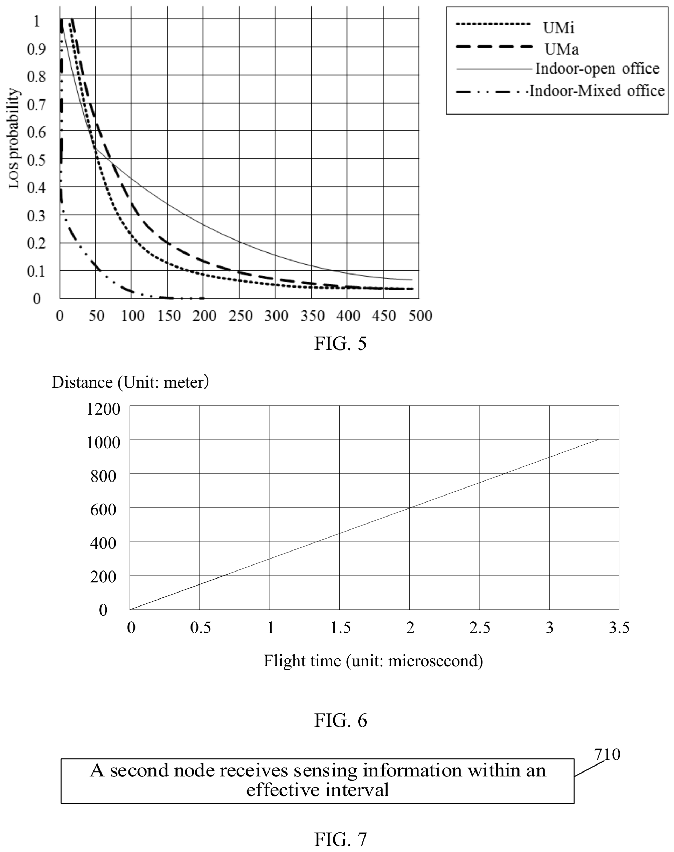

As shown in FIG. 5, exemplary statistical results of a distribution of a line-of-sight (LoS) probability with distance are illustrated for various scenarios (e.g., Urban Micro (UMi), Urban Macro (Uma), indoor-open office, factory, mixed office, office area). To ensure 90% LoS path coverage, the effective range of distance is less than or equal to 20 m in the UMi scenario, the effective range of distance is less than or equal to 22 m in the UMa scenario, the effective range of distance is less than or equal to 10 m in the indoor-open office scenario, and the effective range of distance is less than or equal to 3 m in the indoor-mixed office scenario.

In some embodiments, the delay may refer to a delay in transmitting and receiving the sensing signal, i.e., a difference between a transmitting time of the sensing signal and a receiving time of the sensing signal, which may also be referred to as an arrival delay of the sensing signal (or an arrival time difference of the sensing signal). The effective range of the delay may include one or more value ranges of delay. The value range may be a value range between two threshold values; for example, the value range is greater than a first threshold value and less than a second threshold value. Alternatively, the value range may also be greater than or less than a certain threshold value, or the value range may be a set of one or more values.

Exemplarily, considering a coverage radius of a cellular network, an upper limit value of the effective range of the delay may be set to 0.5 microseconds ($\mu$s) or 1.7 $\mu$s. However, considering the altitude, the upper limit value may also be set to 0.6 $\mu$s or 1.8 $\mu$s. For terminal devices or small stations with small coverage, the upper limit value of the effective range of the delay may be set to 0.04 $\mu$s or 0.07 $\mu$s. Similar to the effective range of distance, the effective range of delay may also be configured according to the scenario. The effective range of delay corresponding to different scenarios may be different.

Distance measurements are often based on a flight time of a signal, i.e., the difference between the transmitting time and the receiving time of the signal.

For the non-self-transmitting and non-self-receiving mode, in a case where the sensing target is close to the transmitting/receiving node of the sensing signal, the receiving time of the signal is also close to the transmitting time of the signal, and the time difference between the two is small. The time difference t between transmitting and receiving signals = (a distance from the transmitting node of the sensing signal to the sensing target + a distance from the sensing target to the receiving node of the sensing signal)/c, where c is the speed of light. FIG. 6 shows a relationship between flight time and distance of a signal. If the sensing distance is within 600 m, the flight time of the signal is within 2 $\mu$s, and the effective range of the delay is less than or equal to 2 $\mu$s.

For the self-transmitting and self-receiving mode, in a case where the sensing target is very close to the transmitting and receiving node of the sensing signal, the sensing signal has not been fully transmitted yet, but the echo signal has already returned, which overlaps with the transmitted signal and cannot be detected. Therefore, some ranging methods have constraints on ambiguous distance, that is, the measurement results are effective only in a case where the target distance is greater than the ambiguous distance. The above situation is taken into consideration, there is an effective range for delay. That is, the sensing information is effective only in a case where the effective range of the delay is greater than a threshold value; for example, the delay T is greater than 0.01 $\mu$s. This threshold value may be determined according to the capabilities reported by the transmitting and receiving node of the sensing signal, or according to protocol regulations. The threshold value is not necessarily unique and is also affected by factors such as frequency band, sensing waveform and sensing mode. Furthermore, if the sensing coverage is taken into consideration, the effective range of the delay may be [0.01 $\mu$s, 2 $\mu$s].

In some embodiments, the time may refer to the arrival time difference of the sensing signal described above, or may be referred to as the relative time difference or round-trip time of the sensing signal, i.e., the difference between the transmitting time of the sensing signal and the receiving time the sensing signal. The effective range of the time may include one or more value ranges of the time. The value range may be a value range between two threshold values; for example, the value range is greater than a first threshold value and less than a second threshold value. Alternatively, the value range may be greater than or less than a certain threshold value, or the value range may be a set of one or more values.

In some embodiments, the intensity may refer to an intensity of the sensing signal, such as the intensity of the sensing signal received by the first node. The intensity of the sensed signal may be expressed as at least one of reception quality, reception power, and line-of-sight probability. The effective range of intensity may include one or more value ranges of intensity. The value range may be a value range between two threshold values; for example, the value range is greater than a first threshold value and less than a second threshold value. Alternatively, the value range may be greater than or less than a certain threshold value, or the value range may be a set of one or more values.

In some embodiments, the amplitude may refer to the amplitude of the sensing signal, such as the amplitude of the sensing signal received by the first node. The effective range of amplitude may include one or more value ranges of amplitude. The value range may be a value range between two threshold values; for example, the value range is greater than a first threshold value and less than a second threshold value. Alternatively, the value range may be greater than or less than a certain threshold value, or the value range may be a set of one or more values.

In some embodiments, the angle may refer to an arrival angle of the sensing signal, such as an arrival angle of the sensing signal received by the first node. The effective range of angle may include one or more value ranges of angle. The value range may be a value range between two threshold values; for example, the value range is greater than a first threshold value and less than a second threshold value. Alternatively, the value range may be greater than or less than a certain threshold value, or the value range may be a set of one or more values.

For example, based on a potential area of a target drone, it may be obtained that the target drone is within a range of plus or minus 30 degrees in a direction of a base station antenna. Therefore, the transmitting/receiving node of the sensing signal only needs to transmit/receive the sensing signal within the range of [-30 degrees, 30 degrees], and to report the sensing information within the range of [-30 degrees, 30 degrees]. In this case, the effective range of angle may be [-30 degrees, 30 degrees].

In some embodiments, the azimuth may refer to the azimuth of the sensing signal. The azimuth may be expressed as the arrival angle of the sensing signal as described above, or may be expressed as multiple azimuths (e.g., east, south, west, or north) specified in advance. The effective range of the azimuth may include one or more value ranges of azimuth. The value range may be a value range between two threshold values; for example, the value range is greater than a first threshold value and less than a second threshold value. Alternatively, the value range may be greater than or less than a certain threshold value, or the value range may be a set of one or more values.

In some embodiments, the speed may refer to a speed of the sensing target, or a relative speed between the first node and the sensing target. The effective range of speed may include one or more value ranges of speed. The value range may be a value range between two threshold values; for example, the value range is greater than a first threshold value and less than a second threshold value. Alternatively, the value range may be greater than or less than a certain threshold value, or the value range may be a set of one or more values.

In some embodiments, the effective range of speed may be configured according to the scenario, and the effective ranges of speed may be different for different scenarios.

For example, for indoor human activities, the typical moving speed of a person is 5 to 7 kilometers/hour (km/h). If the sensing task is to monitor people, only the sensing information within the speed range of 5 to 7 km/h needs to be reported, avoiding reporting the information of fixed objects in the environment. In this case, the effective range of speed may be [5 km/h, 7 km/h].

For example, in the Internet of Vehicles scenario, the speed of cars on urban roads is between 20 and 80 km/h. If the sensing task is to position and track a vehicle, only the sensing information within the speed range of 20 to 80 km/h needs to be reported, avoiding reporting the information about fixed objects around the road. In this case, the effective range of speed may be [20 km/h, 80 km/h].

In some embodiments, the frequency shift may refer to a frequency shift of the sensing signal, such as a frequency shift between the sensing signal received by the first node and the sensing signal transmitted by the first node. The effective range of frequency shift may include one or more value ranges of frequency shift. The value range may be a value range between two threshold values; for example, the value range is greater than a first threshold value and less than a second threshold value. Alternatively, the value range may be greater than or less than a certain threshold value, or the value range may be a set of one or more values.

In some embodiments, the phase may refer to a phase of the sensing signal, such as a phase of the sensing signal received by the first node. The effective range of the phase may include one or more value ranges of the phase. The value range may be a value range between two threshold values; for example, the value range is greater than a first threshold value and less than a second threshold value. Alternatively, the value range may be greater than or less than a certain threshold value, or the value range may be a set of one or more values.

Exemplarily, a time domain channel of a path may be expressed as $h(t) = A\exp(-j\theta)$, where $A$ represents a channel amplitude, $\theta$ is a phase, and j represents an imaginary unit. Usually, $\theta$ is strongly correlated with a propagation distance d, i.e., $\theta = 2\pi d/\lambda$.

For example, for the self-transmitting and self-receiving mode, in a case where $\theta = 2\pi * 2d/\lambda$, the target distance is in a range of 10 m to 15 m, and the frequency is 900 MHz, the phase is in a range of $1.2\pi$ to $1.8\pi$. Only the sensing information within the phase in a range of $1.2\pi$ to $1.8\pi$ needs to be fed back, which may exclude the echo signals of environmental objects within 10 m.

The range of phase change is not only related to distance, but also to wavelength/frequency point. Therefore, the effective range of phase is related to frequency point. The effective range of phase may be configured independently for different frequency points. For example, for f0 = 900 MHz and f0 = 2 GHz, the effective ranges of phase are configured as $0.6\pi$ to $0.9\pi$ and $1.2\pi$ to $1.8\pi$, respectively. Alternatively, the effective range of the phase may be configured for a reference frequency point, and other frequency points may be corrected based on the reference frequency point. For example, for the reference frequency point f0 = 900 MHz, the effective range of phase is configured to be $0.6\pi$ to $0.9\pi$. The effective range of phase corresponding to 2 GHz is corrected to be $1.2\pi$ to $1.8\pi$. The principle of correction may be that the coverage range of distance is the same.

In some embodiments, the frequency may refer to the frequency of the sensing signal, such as the frequency of the sensing signal received by the first node. The effective range of frequency may include one or more value ranges of frequency. The value range may be a value range between two threshold values; for example, the value range is greater than a first threshold value and less than a second threshold value. Alternatively, the value range may be greater than or less than a certain threshold value, or the value range may be a set of one or more values.

In some embodiments, the effective range of frequency may be configured according to the scenario, and the effective range of frequency may be different for different scenarios.

For example, the range of respiratory rate is [0.1 Hz, 0.5 Hz]. If the sensing task is to monitor human breathing, only the sensing information with a frequency between [0.1 Hz, 0.5 Hz] needs to be reported to avoid interference from other information (e.g., heart rate). In this case, the effective range of frequency may be [0.1 Hz, 0.5 Hz].

For example, the frequency of sit-ups is in a range less than 0.5 Hz. If the sensing task is to count the number of sit-ups, only the sensing information with a frequency less than 0.5 Hz needs to be reported to avoid interference from other information (e.g., a companion jumping rope nearby). In this case, the effective range of frequency may be less than 0.5 Hz.

In some embodiments, the period may refer to the period of the sensing signal, such as the period of the sensing signal received by the first node. The effective range of the period may include a value range of one or more periods. The value range may be a value range between two threshold values; for example, the value range is greater than a first threshold value and less than a second threshold value. Alternatively, the value range may be greater than or less than a certain threshold value, or the value range may be a set of one or more values.

In some embodiments, the first node may obtain one or more pieces of sensing information based on the received sensing signals. In a case where the effective interval only includes the effective range of one of the above parameters, for each piece of sensing information, the first node evaluates whether the above parameters corresponding to the piece of sensing information are each within the respective effective range. If the above parameters corresponding to the piece of sensing information are each within the respective effective range, the piece of sensing information is fed back. If the above parameters corresponding to the piece of sensing information are each not within the respective effective range, the piece of sensing information will not be fed back. After the above processes, the first node may determine which one or more pieces of sensing information need to be fed back and which one or more pieces of sensing information do not need to be fed back from the obtained one or more pieces of sensing information. If there is at least one piece of sensing information that needs to be fed back, the first node transmits the at least one piece of sensing information that needs to be fed back.

Exemplarily, in a case where the effective interval only includes the effective range of the distance, assuming that the effective range of the distance is [20 m, 200 m], the first node obtains the following 2 pieces of sensing information based on the received sensing signal: the 1st piece of sensing information includes that the sensing target is at a distance of 5 m, and the 2nd piece of sensing information includes that the sensing target is at a distance of 50 m. Since the distance of 5 m corresponding to the 1st piece of sensing information is not within the effective range [20 m, 200 m], and the distance of 50 m corresponding to the 2nd piece of sensing information is within the effective range [20 m, 200 m], the sensing information transmitted by the first node includes the second piece of sensing information, and the first piece of sensing information does not need to be fed back.

In some embodiments, the first node may obtain one or more pieces of sensing information based on the received sensing signal. In a case where the effective interval includes the effective ranges of at least two parameters of the above parameters, for each piece of sensing information, the first node evaluates whether the at least two parameters corresponding to the piece of sensing information are each within the respective effective range. If the at least two parameters corresponding to the piece of sensing information are each within the effective range, the piece of sensing information is fed back. If at least one of the at least two parameters corresponding to the piece of sensing information is not within the respective effective range, the piece of sensing information is not fed back. After the above processes, the first node may determine which one or more pieces of sensing information need to be fed back and which one or more pieces of sensing information do not need to be fed back from the obtained one or more pieces of sensing information. If there is at least one piece of sensing information that needs to be fed back, the first node transmits the at least one piece of sensing information that needs to be fed back.

For example, in a case where the effective interval includes an effective range of distance and an effective range of speed, it is assumed that the effective range of distance is [20 m, 200 m] and the effective range of speed is [5 km/h, 7 km/h]. Based on the received sensing signal, the first node obtains following 3 pieces of sensing information: the 1st piece of sensing information includes that the sensing target is at a distance of 5 m and has a speed of 0 km/h; the 2nd piece of sensing information includes that the sensing target is at a distance of 50 m and has a speed of 5 km/h; and the 3rd piece of sensing information includes that the sensing target is at a distance of 50 m and has a speed of 10 km/h. Since the distance of 5 m corresponding to the 1st piece of sensing information is not within the effective range [20 m, 200 m], and the speed of 0 km/h corresponding to the 1st piece of sensing information is not within the effective range [5 km/h, 7 km/h], the 1st piece of sensing information does not need to be fed back. Since the distance of 50 m corresponding to the 2nd piece of sensing information is within the effective range [20 m, 200 m], and the speed of 5 km/h corresponding to the 2nd piece of sensing information is within the effective range [5 km/h, 7 km/h], the 2nd piece of sensing information needs to be fed back. Since the distance of 50 m corresponding to the 3rd piece of sensing information is within the effective range [20 m, 200 m], but the speed of 10 km/h corresponding to the 3rd piece of sensing information is not within the effective range [5 km/h, 7 km/h], the 3rd piece of sensing information does not need to be fed back. The sensing information transmitted by the first node includes the above-mentioned 2nd piece of sensing information, while the above-mentioned 1st piece of sensing information and 3rd piece of sensing information do not need to be fed back.

In some embodiments, for the effective range of any of the above parameters, the effective range of the parameter includes one or more value ranges. The value range may be a value range between two threshold values; for example, the value range is greater than a first threshold value and less than a second threshold value. Alternatively, the value range may be greater than or less than a certain threshold value, or the value range may be a set of one or more values. For example, for distance, the effective range of distance may be a value range of [20 m, 200 m], or a value range less than or equal to 200 m, or a value set of {100 m, 200 m}.

In some embodiments, for the effective range of any of the above parameters, the effective range of the parameter may be configured according to the scenario, and the effective range of the parameter corresponding to different scenarios may be different. For example, for parameters such as a distance, a speed, and a frequency, the above examples have shown that different effective ranges may be set for different scenarios.

It should be noted that the effective ranges introduced above for different parameters are only exemplary and explanatory, the specific value of the effective range is not limited in the present disclosure, which is reasonably set according to actual situations.

In some embodiments, if the above effective interval is specified or configured by a protocol, or in other words, the effective range of at least one parameter related to the sensing information is specified or configured by a protocol, the first node transmits the sensing information within the effective interval.

In some embodiments, for any of the above parameters, if there is no effective range for the parameter, the sensing information corresponding to the parameter is not fed back by default, or the sensing information corresponding to the parameter is not constrained by an effective range by default. The effective range of distance is taken as an example, if the effective range of the distance is not specified, the sensing information corresponding to the distance is not fed back by the first node by default, or the sensing information corresponding to the distance is not constrained by the effective range by default.

In some embodiments, for the effective range of any of the parameters, the effective range of the parameter is determined from a limited number of value ranges, or from a combination of the limited number of value ranges. Considering the effective range of distance as an example, assuming that a limited number of value ranges are specified in advance, such as 3 value ranges of [5 m, 20 m], [10 m, 200 m], and [10 m, 500 m], the effective range of distance may include one or more value ranges selected from the 3 value ranges. In some embodiments, the combination of the above value ranges may be a combination of at least two value ranges, or may include only one value range. Still taking the effective range of distance as an example, assume that a limited number of combinations of value ranges are specified in advance, such as following 3 combinations: Combination 1 is consist of [5 m, 20 m] and [30 m, 50 m], Combination 2 is consist of [10 m, 200 m] and [300 m, 400 m], and Combination 3 is [500 m, 1000 m]. The effective range of the distance may include one or more combinations selected from the above 3 combinations. In this way, only a limited number of filters need to be provided in the sensing node (e.g., the first node), which helps to reduce the complexity of system implementation.

In some embodiments, for the effective range of any of the parameters, the effective range of the parameter does not include an ambiguous value of the parameter, where the ambiguous value refers to an inaccurate value. Considering the effective range of distance as an example, assuming that the ambiguous value of distance includes values less than 1 m, the effective range of distance does not include values less than 1 m. For example, the effective range of distance may be set to [1 m, 10 m].

In some embodiments, in a case of specifying or configuring the effective range of the parameter, if the parameter has an ambiguous value, the ambiguous value is first excluded, and the effective range of the parameter is determined from the remaining value range after excluding the ambiguous value. For example, the ambiguous value of the distance includes values less than 1 m. After excluding the ambiguous value, the remaining value range is greater than or equal to ($\geq$) 1 m. The effective range of the distance is determined from the value range ($\geq$ 1 m); for example, the effective range of the distance is determined to be [1 m, 10 m].

The ambiguous values of the above parameters refer to inaccurate values. For example, due to the existence of some factors such as interference or noise, some parameters whose accuracy cannot be guaranteed may be measured. Considering distance as an example, for the self-transmitting and self-receiving sensing scenario, the sensing node not only transmits the sensing signal, but also receives an echo signal of the sensing signal. If an object in the environment is too close to the sensing node, a situation where the echo signal of the sensing signal has already received before the sensing signal is fully transmitted will occur. This interference between transmission and reception may cause the measured distance to be inaccurate. Therefore, an ambiguous value of the distance may be set; for example, the ambiguous value is set to be less than 1 m. The above ambiguous value may be set according to different parameters and/or different scenarios, which is not limited in the present disclosure.

In some embodiments, the effective range of each parameter is constrained separately. That is, the setting of the effective range of a certain parameter is not affected by the setting of the effective ranges of other parameters. For example, the setting of the effective range of distance is not affected by the setting of the effective ranges of other parameters such as speed and angle, and they are set independently.

In some embodiments, constraint exists on effective ranges of at least two parameters jointly. That is, the setting of the effective range of a certain parameter will be affected by the setting of the effective range of at least one other parameter. For example, the setting of the effective range of distance is affected by the setting of the effective range of speed, and constraint exists on the two jointly. The above joint constraint relationship may be specified by a protocol without a configuration process, or may be obtained via configuration; for example, by configuring the parameter AssosicatedSpeedAndDistance bool(0,1) to configure the joint constraint relationship of distance and speed.

For example, a blind person walking senses whether there are obstacles in the surrounding environment. For stationary objects, it is only necessary to sense obstacles within a distance of 10 m. Since obstacles are stationary, obstacles within 10 m will affect the blind person's movement within 5 s (assuming that the sensing information is updated every 5 s), but obstacles more than 10 m will not affect the blind person's movement within 5 s. Moreover, the reliability of the sensing information will decrease as the distance is farther. For moving objects (e.g., pedestrians), it is necessary to sense pedestrians within a distance of 20 m. Since pedestrians are walking, pedestrians within 20 m will affect the blind person's movements within 5 s, but pedestrians beyond 20 m will not affect the blind person's movement within 5 s. Moreover, the reliability of the sensing information will decrease as the distance is farther. For such scenarios, the effective range of sensing information needs to be jointly constrained by combining distance and speed. For example, the effective ranges are expressed as: speed $\leq$ 0.5 m/s & distance $\leq$ 10 m, and 0.5 m/s < speed < 2 m/s & distance $\leq$ 20 m. In addition, according to the effective range of the distance, the transmitting node of the sensing signal may appropriately reduce the transmitting power of the sensing signal to save power consumption.

Exemplarily, the first node detects 3 moving targets and a large number of stationary targets through channel detection. The 3 moving targets are expressed as: D = 20 m & Speed = 20 km/h, D = 200 m & Speed = 30 km/h, and D = 50 m & Speed = 3 km/h, respectively, where D represents a distance between the first node and the moving target, and Speed represents a speed of the moving target. Assuming that the effective interval includes the effective range of speed, which is [20 km/h, 80 km/h], the second node only feeds back two sensing information: D = 20 m & Speed = 20 km/h and D = 200 m & Speed = 30 km/h.

In some embodiments, if there is no sensing information within the effective interval, the sensing information includes an ineffective value, or the sensing information is not be sent. For example, in a case where all the sensing information obtained by the first node based on the received sensing signal is not within the effective interval, the first node may transmit sensing information including an ineffective value to inform a receiving party that there is no sensing information within the effective interval, or the first node may not transmit the sensing information, thereby saving transmission resources. In some embodiments, the ineffective value may be specified by a protocol; for example, the ineffective value is 0000.

In some embodiments, the sensing information includes: a measurement value of the sensing signal, or a quantized result of the measurement value of the sensing signal, or an interval index in which the measurement value of the sensing signal is located. The first node may measure the sensing signal to obtain sensing information. Therefore, the sensing information may include the measurement value of the sensing signal, i.e., the direct result obtained by measuring the sensing signal; or the sensing information may include the quantized result of the measurement value or the interval index in which the measurement value is located, so as to further reduce the number of bits required for the sensing information to save the transmission resources required for sensing information feedback. Exemplarily, considering an example in which the first node measures the sensing signal to obtain the distance of the sensing target, the direct result obtained by the above measurement is the distance value itself, such as 5 m. In some embodiments, the measurement may be quantified. For example, if the quantization coefficient is 10, then [0, 10m] may be represented by a quantization result such as 0, (10, 20 m] may be represented by a quantized result such as 1, (20, 30 m] may be represented by a quantized result, such as 2, and so on. In a case where the measured distance value is 5 m, the corresponding quantized result is 0, and the sensing information may include the quantized result "0" of the measured value. In some embodiments, multiple interval indexes may be set for the measurement value. For example, the interval index corresponding to [0, 10 m] is 0, the interval index corresponding to (10, 20 m] is 1, the interval index corresponding to (20, 30 m] is 2, and so on. In a case where the measured distance value is 5 m, which belongs to the interval [0, 10 m], so that the corresponding interval index is 0. In this case, the sensing information may include the interval index "0" in which the measured value is located.

In some embodiments, the sensing information is determined based on sensing data within the effective interval. The sensing data may be understood as the measurement result obtained by measuring sensing signal. The sensing information may be the measurement result, or information obtained by processing the measurement result. Exemplarily, the first node measures the sensing signal to obtain sensing data, and generates sensing information according to the sensing data. For example, a measurement result obtained by measuring the sensing signal is a distance, and the sensing information includes the distance. For another example, a measurement result obtained by measuring the sensing signal is a delay, and a distance is further calculated based on the delay. The sensing information includes the distance. Therefore, the effective interval may also be set for the sensing data. After the first node filters out the sensing data within the effective interval, sensing information is generated based on the sensing data within the effective interval.

In some embodiments, the sensing signal includes at least one of an acoustic wave, an electromagnetic wave, or a light wave, and the sensing information includes information about a target or environment obtained directly or indirectly based on the sensing signal. The light wave may be a laser or other forms of light waves, which is not limited in the present disclosure. The target refers to a sensing target, such as pedestrians, vehicles, obstacles, which may be determined in combination with the actual sensing scenario, and is not limited in the present disclosure. The above environment refers to the environment in which the sensing node is located, such as a certain geographical location, a certain building, and an office, which is not limited in the present disclosure. In a case where the sensing information includes information about the target, the sensing information may include at least one piece of information such as the position, speed and distance of the target, which may be determined in combination with actual sensing needs, and is not limited in the present disclosure. In a case where the sensing information includes information about environment, the sensing information may include at least one piece of information such as whether there are obstacles in the environment, whether there is a detection target in the environment, the position, speed and distance of the detection target in the environment, which may be determined in combination with actual sensing needs, and is not limited in the present disclosure. The above directly obtaining the sensing information based on the sensing signal refers to measuring the sensing signal and directly using the obtained measurement value as the sensing information. The above indirect obtaining the sensing information based on the sensing signal refers to measuring the sensing signal and further obtaining the sensing information according to the measurement value. For example, a time delay measurement is performed on the sensing signal, and the distance is further obtained as the sensing information based on the measured time delay.

In the technical solutions provided by the embodiments of the present disclosure, by constraining the effective interval of sensing information, the sensing node transmits the sensing information within the effective interval, while the sensing information outside the effective interval does not need to be transmitted, thereby avoiding always feeding back the full amount of sensing information, which not only helps to reduce the processing complexity and power consumption of the sensing node, but also reduces the feedback amount, saves transmission resources, and improves the transmission efficiency of sensing information.

In some embodiments, the above effective interval may be specified by a protocol without a configuration process. The "protocol" mentioned in the present disclosure may refer to a standard protocol in the field of communication, which may include, for example, an long-term evolution (LTE) protocol, an NR protocol, and related protocols used in future communication systems, which is not limited in the present disclosure. The "specified by a protocol" mentioned in the present disclosure refer to provisions in the standard protocols in the field of communication.

In some embodiments, the above effective interval is obtained by configuration. For this case, the first node receives configuration information, and the configuration information is used for configuring the above effective interval. In some embodiments, the configuration information may include the above effective interval, such as effective ranges of one or more parameters. In some embodiments, the configuration information may include any other information, such as index values of effective ranges of one or more parameters, capable of determining the above effective interval.

In some embodiments, the configuration information is configured by the second node that receives the sensing information. In some embodiments, the second node transmits configuration information, and the first node receives the configuration information and determines the effective interval according to the configuration information. The first node transmits the sensing information within the effective interval to the second node, and the second node receives the sensing information within the effective interval.

In some embodiments, the above configuration information may not be configured by the second node that receives the sensing information, but may be configured by a third node in the sensing system, for example. The third node is different from both the first node and the second node. In some embodiments, the third node transmits configuration information, and the first node receives the configuration information and determines the effective interval according to the configuration information. The first node transmits sensing information within the effective interval to the second node, and the second node receives the sensing information within the effective interval. In some embodiments, the third node may be any one of: an access network device (e.g., a base station), a terminal device, a server, or a core network element. In the embodiments of the present disclosure, there is no limitation on which device is used to implement the third node.

In some embodiments, the above configuration information is used for configuring a constraint condition on the sensing information. In some embodiments, the constraint condition includes at least one of: the sensing information being within an effective interval, and the sensing information being obtained based on a sensing signal that meets a quality requirement. For an introduction to the quality requirement, reference will be made to the examples below.

In some embodiments, the effective interval may be configured independently for different objects. That is, for different objects, the effective interval may be configured separately and independently. The object includes at least one of: a sensing node, a scenario, or a service.

In some embodiments, for a sensing node with a single capability, a default state may be used without transmitting additional configuration information. For example, for a sensing node that only has ranging capability, the effective interval of the distance may be specified by a protocol, or pre-configured in factory settings of the node, instead of configuring the effective interval of the distance via configuration information.

In some embodiments, the effective interval may be provided to the transmitting node of the sensing signal or the configuring node of the sensing signal in a protocol-specified or a configured manner to guide the transmitting and configuring of the sensing signal. For example, a period of transmitting the sensing signal or a cluster interval of the sensing signal is determined according to the effective interval of the speed.

By specifying or configuring the effective interval by a protocol, the sensing node is enabled to take the constraints of the effective interval into account when feeding back sensing information, and to feed back the sensing information within the effective interval..

In some embodiments, in addition to constraining the effective interval of the sensing information, the sensing information may also be constrained by other restrictions.

In some embodiments, the sensing information is obtained based on a sensing signal that meets a quality requirement.

In some embodiments, the sensing information meets following constraint conditions: the sensing information being within an effective interval, and the sensing information being obtained based on a sensing signal that meets a quality requirement.

As described above, the first node may measure the sensing signal to obtain the sensing information. In a case of feeding back the sensing information, the first node may not only constrain the effective interval of the sensing information but also constrain the quality requirement of the sensing signal. The first node only needs to feed back the sensing information obtained based on the sensing signal that meets the quality requirement. In other words, the first node may not process or provide feedback for the sensing signal that does not meet the quality requirement.

In some embodiments, the quality requirement is determined according to at least one of following information: reception quality of the sensing signal, reception power of the sensing signal, or line-of-sight probability of the sensing signal. In some embodiments, the reception quality includes at least one of: signal to noise ratio (SNR), signal to interference plus noise ratio (SINR), reference signal receiving quality (RSRQ), peak to average power ratio (PAPR), or cubic metric (CM). In some embodiments, the reception power includes at least one of: signal power, reference signal receiving power (RSRP), or received signal intensity indicator (RSSI). The LoS probability refers to a probability that a LoS path (i.e., a direct path) exists in a spatial environment, i.e., a probability that an echo signal of the sensing signal is a direct path.

In some embodiments, the sensing information transmitted by the first node includes: a value of the sensing information, and/or a statistical result of the value of the sensing information. The value of the sensing information refers to the value of the sensing information actually measured. The statistical result of the value of the sensing information may be a result obtained by performing statistical analysis on the values of the sensing information actually measured. Considering the value of the sensing information including distance as an example, the statistical result of the value of the sensing information may be a distribution of distance, such as a distribution of distance in several intervals. Alternatively, the statistical result of the value of the sensing information may be a proportion of the number of distances within the effective range to the total number of measured distances. The specific form of the statistical result is not limited in the present disclosure.

In some embodiments, the constraint condition includes: the sensing information being within the effective interval. The first node only feeds back the sensing information within the effective interval, and does not need to feed back the sensing information outside the effective interval.

In some embodiments, the constraint condition includes: the sensing information being obtained based on a sensing signal that meets a quality requirement. The first node only feeds back the sensing information obtained based on the sensing signal that meet the quality requirement, and does not process or feed back the sensing signal that does not meet the quality requirement.

In some embodiments, the constraint conditions include: the sensing information being within the effective interval, and the sensing information being obtained based on the sensing signal that meets the quality requirement. The first node only feeds back the sensing information obtained based on the sensing signal that meets the quality requirement and within the effective interval. The sensing signal that does not meet the quality requirement does not need to be processed or fed back. The sensing information obtained from the sensing signal that meets the quality requirement but not within the effective interval does not need to be fed back.

Through the above methods, in addition to constraining the effective range of sensing information, the quality requirement of the sensing signal may also be constrained, which may not only further reduce the feedback amount and improve the transmission efficiency of sensing information, but also help to improve the accuracy of the feedback sensing information.

In some embodiments, in a case where a number of sensing signals that meet a first condition is greater than an upper limit value N, the sensing information is obtained based on N sensing signals that meet the first condition, and the N sensing signals that meet the first condition are selected according to a priority principle, where N is a positive integer. In some embodiments, the first condition includes: the sensing information obtained based on the sensing signal being within the effective interval. In some embodiments, the first condition includes: the sensing signal meeting a quality requirement. In some embodiments, the first condition includes: the sensing information obtained based on the sensing signal being within the effective interval, and the sensing signal meeting the quality requirement.

In some embodiments, in a case where the number of sensing signals that meet the first condition is less than or equal to the upper limit value N, the first node will normally feedback sensing information obtained based on sensing signal(s) that meet the first condition. For sensing information corresponding to other sensing signals that do not meet the first condition, no feedback may be given or an ineffective value may be given as feedback, which may be specified by a protocol. For example, the first node feeds back sensing information obtained based on the first N sensing signals that meet the quality requirement. In a case where only K sensing signals meet the quality requirement and K<N, sensing information corresponding to the (K+1)-th to N-th sensing signals is not fed back or an ineffective value is fed back. In particular, in a case where all the sensing signals received by the first node do not meet the quality requirement, i.e., K=0, the first node does not perform feedback or feeds back all ineffective values, which may be specified by a protocol.

In some embodiments, the upper limit value N may be specified by a protocol or configured by configuration information. By limiting the upper limit value of the number of sensing signals, it is possible to avoid excessive feedback of sensing information.

In some embodiments, the priority principle is determined based on at least one of the following information: a reliability of the sensing signal, a reception quality of the sensing signal, a reception power of the sensing signal, a line-of-sight probability of the sensing signal, or a distance between the sensing signal and a center value.

In some embodiments, the priority of the sensing signal is determined according to one of the above information, for example, according to the received power. The greater the received power, the higher the priority. The first node sorts the received sensing signals in descending order of received power. If the number of sensing signals meeting the first condition in the sequence is greater than the upper limit value N, N sensing signals meeting the first condition at the head of the sequence are selected, and sensing information is obtained based on the selected sensing signal(s). If the number of the sensing signals in the sequence that meet the first condition is less than or equal to the upper limit value N, the sensing signals in the sequence that meet the first condition are selected, and the sensing information is obtained based on the selected sensing signal(s).

In some embodiments, the priority of the sensing signal is determined based on at least two types of the information mentioned above, for example, according to the reception quality and the line-of-sight probability. For example, the priority value may be calculated based on the reception quality and the line-of-sight probability through a predefined algorithm. Assuming that the larger the priority value, the higher the priority, the first node calculates the priority values of the received sensing signals respectively and sorts them in descending order of the priority values. Assuming that the smaller the priority value, the higher the priority, the first node calculates the priority values of the received sensing signals respectively and sorts them in ascending order of the priority values. In a case where the number of sensing signals meeting the first condition in the sequence is greater than the upper limit value N, N sensing signals meeting the first condition at the head of the sequence are selected, and sensing information is obtained based on the selected sensing signal(s). If the number of the sensing signals in the sequence that meet the first condition is less than or equal to the upper limit value N, the sensing signals in the sequence that meet the first condition are selected, and the sensing information is obtained based on the selected sensing signal(s).

In addition, in a case of selecting the N sensing signals that meet the first condition based on the priority principle, there are multiple sensing signals with the same priority, at least one sensing signal may be randomly selected from the multiple sensing signals, so that the number of sensing signals finally selected meets the restriction requirement of the upper limit value N.

In a case where the number of sensing signals that meet the first condition is greater than the upper limit value N, the first node selects N sensing signals from the sensing signals that meet the first condition based on the priority principle, and feeds back sensing information obtained based on the N sensing signals, which not only avoids excessive feedback of sensing information, but also helps to improve the accuracy of the feedback sensing information.

Referring to FIG. 7, which shows a flowchart of a method for receiving sensing information provided by an embodiment of the present disclosure. The method may include the following step 710.

In step 710, a second node receives sensing information within an effective interval.

In some embodiments, the effective interval includes an effective range of at least one parameter related to the sensing information.

In some embodiments, the second node receives the sensing information transmitted by the first node, where the sensing information is within the effective interval.

In some embodiments, the second node transmits configuration information, where the configuration information is used for configuring the effective interval. In some embodiments, the second node may transmit the configuration information in a broadcast, multicast or unicast manner.

In some embodiments, the second node transmits configuration information, and the first node receives the configuration information and determines the effective interval according to the configuration information. The first node transmits the sensing information within the effective interval to the second node, and the second node receives the sensing information within the effective interval.

In some embodiments, the configuration information is used for configuring a constraint condition on the sensing information. In some embodiments, the constraint condition includes at least one of: the sensing information being within an effective interval, and the sensing information being obtained based on a sensing signal that meets a quality requirement. The first node receives the configuration information and determines the constraint condition according to the configuration information. The first node transmits sensing information that meets the constraint condition to the second node, and the second node receives the sensing information that meets the constraint condition.

For details not described in detail in this embodiment, reference will be made to the above embodiments, which will not be repeated here.

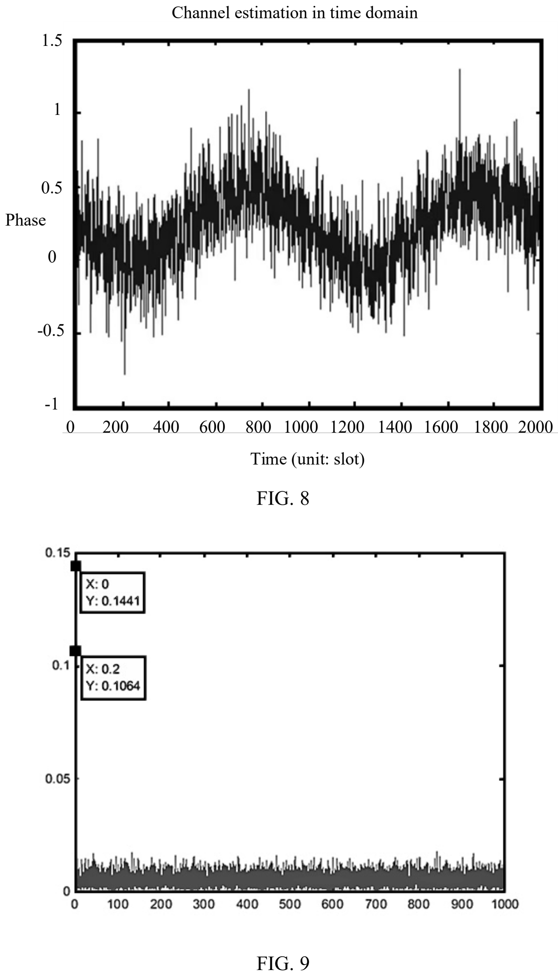

Exemplarily, the sensing feedback of respiratory frequency is taken as an example. The effective interval is specified by a protocol or configured through configuration information, and the effective interval includes an effective range of frequency [0.1 Hz, 0.5 Hz]. At a t-th time within a first time window, the first node calculates a peak index of a time domain LoS path $\hat{h}(n)$ and then calculates the phase through $\theta(t) =$ Angle $(\max\{\hat{h}(n)\})$, and then fast fourier transformation (FFT) is performed on the phase information $[\theta_0, \theta_1 \ldots , \theta_{T-1}]$ measured within the first time window (as shown in FIG. 8) based on the following formula to obtain the spectrum diagram shown in FIG. 9. In FIG. 8, the horizontal axis represents time k, the unit of which is slot, and the vertical axis represents phase $\theta(k)$. In FIG. 9, the horizontal axis is n, and the vertical axis is f(n). Note: a normalization coefficient 1/T may also be added, as long as the transmitting side and receiving side have the same understanding for the transformation.

$$f(n) = \sum_{k=0}^{T-1} \theta(k) e^{-j2\pi \frac{kn}{T}}, n \in 0, 1, \ldots, N-1$$

A frequency component $f_0$ meeting a spectrum coefficient is extracted, $f_0 = 0$ and $f_0 = 0.2$ Hz. Here, only $f_0 = 0.2$ Hz is within the effective interval, so that the first node only feeds back the sensing information of $f_0 = 0.2$ Hz.

Exemplarily, sensing feedback of traffic conditions is taken as an example. The effective interval is specified by a protocol or configured through configuration information, and the effective interval includes: an effective range of an area and an effective range of a speed. The effective range of the area may be a rectangular area surrounded by 4 locations, and the effective range of the speed includes 5 ranges, which are expressed by $\leq$ 20 km/h, (20 km/h, 60 km/h], (60 km/h, 80 km/h], (80 km/h, 100 km/h], and > 100 km/h. The sensing information is a proportion of reflection points within the effective range of the above 5 speeds within the effective range of the above area. The first node measures an echo signal of the sensing signal and obtains 50 reflection points within the effective range of the area. Here, the number of reflection points where the moving speed is within the effective range of the 5 speeds is 40, 9, 0, 1, and 0, respectively, and the corresponding proportions are 80%, 18%, 0%, 2%, and 0%. The first node feeds back 80%, 18%, 0%, 2%, and 0% as the sensing information. The second node receives the sensing information fed back by the first node and preliminarily determine that congestion occurs on the road section.

It should be noted that the above steps performed by the first node may be independently implemented as a method for transmitting sensing information on the first node side; the above steps performed by the second node may be independently implemented as a method for receiving sensing information on the second node side.

The apparatus embodiments of the present disclosure will be described below, which may be used to perform method embodiments of the present disclosure. For details not disclosed in the apparatus embodiments of the present disclosure, reference is made to the method embodiments of the present disclosure.

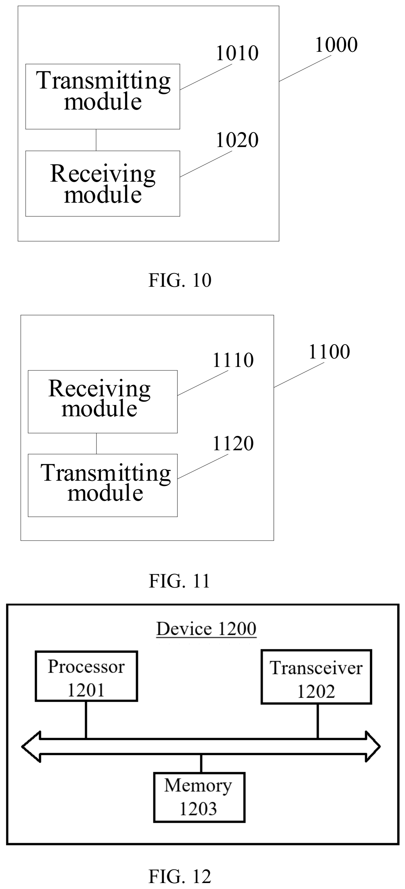

Referring to FIG. 10, which shows a block diagram of an apparatus for transmitting sensing information provided by an embodiment of the present disclosure. The apparatus has the function of implementing the method examples on the first node side, and the function may be implemented by a hardware or by performing corresponding software through hardware. The apparatus may be the first node described above, or may be disposed in the first node. As shown in FIG. 10, the apparatus 1000 may include: a transmitting module 1010.

The transmitting module 1010 is configured to transmit sensing information within an effective interval, where the effective interval includes an effective range of at least one parameter related to the sensing information.

In some embodiments, the at least one parameter includes at least one of: a distance, a delay, a time, intensity, an amplitude, an angle, an azimuth, a speed, a frequency shift, a phase, a frequency, or a period.

In some embodiments, an effective range of each parameter is constrained separately, or effective ranges of at least two parameters are constrained jointly.

In some embodiments, for an effective range of any parameter, the effective range of the parameter includes one or more value ranges.

In some embodiments, for the effective range of any parameter, the effective range of the parameter is determined from a limited number of value ranges, or from a combination of the limited number of value ranges.

In some embodiments, for any parameter, in a case where the effective range of the parameter does not exist, sensing information corresponding to the parameter is not fed back by default, or the sensing information corresponding to the parameter is not constrained by an effective range by default.

In some embodiments, for an effective range of any parameter, the effective range of the parameter does not include an ambiguous value of the parameter, where the ambiguous value refers to an inaccurate value.

In some embodiments, the apparatus 1000 further includes: a receiving module 1020 configured to receive configuration information, where the configuration information is used for configuring the effective interval.

In some embodiments, the configuration information is configured by a second node that receives the sensing information.

In some embodiments, the sensing information meets following constraint conditions:

the sensing information being within the effective interval; and
the sensing information being obtained based on a sensing signal that meets a quality requirement.

In some embodiments, the quality requirement is determined according to at least one of following information: a reception quality of the sensing signal, a reception power of the sensing signal, or a line-of-sight probability of the sensing signal.

In some embodiments, the sensing information includes: sensing information that meets a constraint condition, and/or a statistical result of the sensing information that meets the constraint condition; where the constraint condition includes the sensing information being within the effective interval.

In some embodiments, in a case where a number of sensing signals that meet a first condition is greater than an upper limit value N, the sensing information is obtained based on N sensing signals that meet the first condition selected according to a priority principle, N being a positive integer, where the first condition includes: the sensing information obtained based on the sensing signal being within the effective interval.

In some embodiments, the priority principle is determined based on at least one of the following information: a reliability of the sensing signal, a reception quality of the sensing signal, a reception power of the sensing signal, a line-of-sight probability of the sensing signal, or a distance between the sensing signal and a center value.

In some embodiments, in a case where there is no sensing information within the effective interval, the sensing information includes an ineffective value, or the sensing information is not transmitted.

In some embodiments, the sensing information includes: a measurement value of the sensing signal, or a quantized result of the measurement value of the sensing signal, or an interval index in which the measurement value of the sensing signal is located.

In some embodiments, the sensing information is determined based on sensing data within the effective interval.

In some embodiments, the sensing signal includes at least one of an acoustic wave, an electromagnetic wave, or a light wave, and the sensing information includes information about a target or environment obtained directly or indirectly based on the sensing signal.

Referring to FIG. 11, which shows a block diagram of an apparatus for receiving sensing information provided by an embodiment of the present disclosure. The apparatus has the function of implementing the method examples on the second node side, and the function may be implemented by a hardware or by performing corresponding software through a hardware. The apparatus may be the second node described above, or may be disposed in the second node. As shown in FIG. 11, the apparatus 1100 may include: a receiving module 1110.

The receiving module 1110 is configured to receive sensing information within an effective interval, where the effective interval includes an effective range of at least one parameter related to the sensing information.

In some embodiments, the at least one parameter includes at least one of: a distance, a delay, a time, intensity, an amplitude, an angle, an azimuth, a speed, a frequency shift, a phase, a frequency, or a period.

In some embodiments, an effective range of each parameter is constrained separately, or effective ranges of at least two parameters are constrained jointly.

In some embodiments, for an effective range of any parameter, the effective range of the parameter includes one or more value ranges.

In some embodiments, for the effective range of any parameter, the effective range of the parameter is determined from a limited number of value ranges, or from a combination of the limited number of value ranges.

In some embodiments, for any parameter, in a case where the effective range of the parameter does not exist, the sensing information corresponding to the parameter is not fed back by default, or the sensing information corresponding to the parameter is not constrained by the effective range by default.

In some embodiments, for the effective range of any parameter, the effective range of the parameter does not include an ambiguous value of the parameter, where the ambiguous value refers to an inaccurate value.

In some embodiments, the apparatus 1100 further includes: a transmitting module 1120 configured to transmit configuration information, where the configuration information is used for configuring the effective interval.

In some embodiments, the sensing information meets following constraint condition:

the sensing information being within the effective interval; and
the sensing information being obtained based on a sensing signal that meets a quality requirement.

In some embodiments, the quality requirement is determined according to at least one of following information: a reception quality of the sensing signal, a reception power of the sensing signal, or a line-of-sight probability of the sensing signal.

In some embodiments, the sensing information includes: sensing information that meets a constraint condition and/or a statistical result of the sensing information that meets the constraint condition, where the constraint condition includes the sensing information being within the effective interval.

In some embodiments, in a case where a number of sensing signals that meet a first condition is greater than an upper limit value N, the sensing information is obtained based on N sensing signals that meet the first condition selected according to a priority principle, N being a positive integer, where the first condition includes: the sensing information obtained based on the sensing signal being within the effective interval.

In some embodiments, the priority principle is determined according to at least one of the following information: a reliability of the sensing signal, a reception quality of the sensing signal, a reception power of the sensing signal, a line-of-sight probability of the sensing signal, or a distance between the sensing signal and a center value.

In some embodiments, in a case where there is no sensing information within the effective interval, the sensing information includes an effective value, or the sensing information is not transmitted.

In some embodiments, the sensing information includes: a measurement value of the sensing signal, or a quantized result of the measurement value of the sensing signal, or an interval index in which the measurement value of the sensing signal is located.

In some embodiments, the sensing information is determined based on sensing data within the effective interval.

In some embodiments, the sensing signal includes at least one of an acoustic wave, an electromagnetic wave, or a light wave, and the sensing information includes information about a target or environment obtained directly or indirectly based on the sensing signal.

It should be noted that the apparatuses provided by the above embodiments only uses the division of the functional modules as an example to implement its functions. In actual applications, the functions may be assigned to different functional modules to be achieved according to actual needs; that is, a content structure of a device may be divided into different functional modules to implement all or part of the functions described above.

For the apparatuses in the above embodiments, the specific manner in which each module performs operations has been described in detail in the method embodiments, which will not be repeated here.

Referring to FIG. 12, which shows a schematic structural diagram of a device 1200 provided by an embodiment of the present disclosure. The device 1200 may be configured to perform the steps of the method in the above embodiments. The device 1200 may be an access network device (e.g., a base station), a terminal device, a server, a core network element, a sensing information collector, or other devices. The device 1200 may include: a processor 1201, a transceiver 1202, and a memory 1203. The transceiver 1202 is configured to perform the functions of the above transmitting module and/or the receiving module, and the processor 1201 is configured to perform other processing functions or control transmitting and/or receiving.

The processor 1201 includes one or more processing cores. The processor 1201 performs various functional applications and information processing by running software programs and modules.

The transceiver 1202 may include a receiver and a transmitter. For example, the receiver and the transmitter may be implemented as a same wireless communication component, and the wireless communication component may include a wireless communication chip and a radio frequency antenna.

The memory 1203 may be connected to the processor 1201 and the transceiver 1202.

The memory 1203 may be configured to store a computer program performed by the processor, and the processor 1201 is configured to perform the computer program to perform various steps of the above method.

In addition, the memory 1203 may be implemented by any type of volatile or non-volatile storage device or a combination thereof, and the volatile or non-volatile storage device includes but is not limited to: a magnetic disk or an optical disk, an electrically erasable programmable read-only memory, an erasable programmable read-only memory, a static access memory, a read-only memory, a magnetic memory, a flash memory, and a programmable read-only memory.

In some embodiments, in a case where the device 1200 is implemented as the first node, the transceiver 1202 is configured to transmit sensing information within an effective interval, where the effective interval includes an effective range of at least one parameter related to the sensing information.

In some embodiments, in a case where the device 1200 is implemented as the second node, the transceiver 1202 is configured to receive sensing information within an effective interval, where the effective interval includes an effective range of at least one parameter related to the sensing information.

For details not described in detail in the above embodiments, reference is made to the introduction in the method embodiments, which will not be repeated here.

The embodiments of the present disclosure provide a computer-readable storage medium, where the computer-readable storage medium stores a computer program, and the computer program is configured to be performed by a processor of the first node to perform the method for transmitting sensing information.

The embodiments of the present disclosure provide a computer-readable storage medium, where the computer-readable storage medium stores a computer program, and the computer program is configured to be performed by a processor of the second node to perform the method for receiving sensing information.

In some embodiments, the computer-readable storage medium may include: a read-only memory (ROM), a random-access memory (RAM), a solid state drive (SSD), or an optical disk. A random access memory may include a resistance random access memory (ReRAM) and dynamic random access memory (DRAM).

Embodiments of the present disclosure provide a chip, and the chip includes a programmable logic circuit and/or program instructions, and when operating on the first node, the chip is configured to perform the method for transmitting sensing information.

Embodiments of the present disclosure provide a chip, and the chip includes a programmable logic circuit and/or program instructions, and when operating on the second node, the chip is configured to perform the method for receiving sensing information.

Embodiments of the present disclosure provide a computer program product, where the computer program product includes computer programs, the computer programs are stored in a computer-readable storage medium, and a processor of the first node reads the computer programs from the computer-readable storage medium and performs the computer programs to perform the method for transmitting sensing information.

Embodiments of the present disclosure provide a computer program product, where the computer program product includes computer programs, the computer programs are stored in a computer-readable storage medium, and a processor of the second node reads the computer programs from the computer-readable storage medium and performs the computer programs to perform the method for receiving sensing information.

It should be understood that "indication" mentioned in the embodiments of the present disclosure may mean a direct indication, or an indirect indication, or may represent an association. For example, A indicates B, which may mean that A directly indicates B (for example, B may be obtained by A), or may mean that A indirectly indicates B (for example, A indicates C, and B may be obtained by C), or may mean that there is an association between A and B.

In the description of the embodiments of the present disclosure, the term "corresponding" may mean that there is a direct correspondence or indirect correspondence between two, or there is an association between the two, or may mean a relationship of indicating and being indicated or a relationship of configuring and being configured, etc.

The term "multiple" herein refers to two or more. The term "and/or" is an association relationship to describe associated objects, which means that there may be three kinds of relationships. For example, A and/or B may represent that: A exists alone, both A and B exist, and B exists alone. In addition, the character "/" herein generally means that related objects before and after "/" are in an "or" relationship.

In addition, the step numbers described herein only illustrate a possible execution order between the steps. In some other embodiments, the above steps may also be executed in a non-numbered order, such as two steps with different numbers are executed simultaneously, or two steps with different numbers are executed in the opposite order to that shown in the figure, which is not limited in the embodiments of the present disclosure.

Those skilled in the art should be appreciate that in one or more of the above examples, the functions described in the embodiments of the present disclosure may be implemented in hardware, software, firmware or any combination thereof. When implemented in software, the functions may be stored in a computer-readable medium or transmitted as one or more instructions or codes in a computer-readable medium. The computer-readable media includes both a computer storage media and a communication media, where the communication media includes any medium that facilitates transfer of a computer program from one place to another. The storage media may be any available media that may be accessed by a general purpose or special purpose computer.

The above descriptions are merely exemplary embodiments of the present disclosure and are not intended to limit the present disclosure. Any modifications, equivalent substitutions, improvements, etc. made within the spirit and principles of the present disclosure shall be included within the scope of protection of the present disclosure.

## Claims

1. A method for transmitting sensing information, performed by a first node, and comprising:
   transmitting sensing information within an effective interval, wherein the effective interval comprises an effective range of at least one parameter related to the sensing information.

2. The method according to claim 1, wherein the at least one parameter comprises at least one of a distance, a delay, a time, intensity, an amplitude, an angle, an azimuth, a speed, a frequency shift, a phase, a frequency, or a period.

3. The method according to claim 1 or 2, wherein

   an effective range of each of the at least one parameter is constrained separately; or
   effective ranges of at least two parameters are constrained jointly.

4. The method according to claim 1, wherein for an effective range of any one of the at least one parameter, the effective range of the parameter comprises one or more value ranges.

5. The method according to any one of claims 1 to 4, wherein for an effective range of any one of the at least one parameter, an effective range of the parameter is determined from a limited number of value ranges, or from a combination of the limited number of value ranges.

6. The method according to any one of claims 1 to 5, wherein for any of the at least one parameter, in a case where an effective range of the parameter does not exist, sensing information corresponding to the parameter is not fed back by default, or the sensing information corresponding to the parameter is not constrained by the effective range by default.

7. The method according to any one of claims 1 to 6, wherein for an effective range of any one of the at least one parameter, the effective range of the parameter does not comprise an ambiguous value of the parameter, the ambiguous value referring to an inaccurate value.

8. The method according to any one of claims 1 to 7, further comprising:
   receiving configuration information, wherein the configuration information is used for configuring the effective interval.

9. The method according to claim 8, wherein the configuration information is configured by a second node that receives the sensing information.

10. The method according to any one of claims 1 to 9, wherein the sensing information is obtained based on a sensing signal that meets a quality requirement.

11. The method according to claim 10, wherein the quality requirement is determined according to at least one of following information: a reception quality of the sensing signal, a reception power of the sensing signal, or a line-of-sight probability of the sensing signal.

12. The method according to any one of claims 1 to 11, wherein the sensing information comprises: a value of the sensing information and/or a statistical result of the value of the sensing information.

13. The method according to any one of claims 1 to 12, wherein in a case where a number of sensing signals that meet a first condition is greater than an upper limit value N, the sensing information is obtained based on N sensing signals that meet the first condition, N being a positive integer; wherein the N sensing signals that meet the first condition are selected according to a priority principle, and the first condition comprises: sensing information obtained based on a sensing signal being within the effective interval.

**14.** The method according to claim 13, wherein the priority principle is determined according to at least one of following information: a reliability of a sensing signal, a reception quality of the sensing signal, reception power of the sensing signal, a line-of-sight probability of the sensing signal, or a distance between the sensing signal and a center value.

**15.** The method according to claim 1, wherein in a case where no sensing information is within the effective interval, the sensing information comprises an ineffective value, or the sensing information is not transmitted.

**16.** The method according to any one of claims 1 to 15, wherein the sensing information comprises: a measurement value of a sensing signal, or a quantized result of the measurement value of the sensing signal, or an interval index in which the measurement value of the sensing signal is located.

**17.** The method according to any one of claims 1 to 16, wherein the sensing information is determined based on sensing data within the effective interval.

**18.** The method according to any one of claims 1 to 17, wherein the sensing signal comprises at least one of an acoustic wave, an electromagnetic wave, or a light wave, and the sensing information comprises information about a target or environment obtained directly or indirectly based on the sensing signal.

**19.** A method for receiving sensing information, performed by a second node, and comprising:
receiving sensing information within an effective interval, wherein the effective interval comprises a effective range of at least one parameter related to the sensing information.

**20.** The method according to claim 19, wherein the at least one parameter comprises at least one of: a distance, a delay, a time, intensity, an amplitude, an angle, an azimuth, a speed, a frequency shift, a phase, a frequency, or a period.

**21.** The method according to claim 19 or 20, wherein

an effective range of each of the at least one parameter is constrained separately; or
effective ranges of at least two parameters are constrained jointly.

**22.** The method according to any one of claims 19 to 21, wherein for an effective range of any one of the at least one parameter, an effective range of the parameter comprises one or more value ranges.

**23.** The method according to any one of claims 19 to 22, wherein for the effective range of any one of the parameters, the effective range of the parameter is determined from a limited number of value ranges, or from a combination of the limited number of value ranges.

**24.** The method according to any one of claims 19 to 23, wherein for any one of the at least one parameter, in a case where an effective range of the parameter does not exist, sensing information corresponding to the parameter is not fed back by default, or the sensing information corresponding to the parameter is not constrained by the effective range by default.

**25.** The method according to any one of claims 19 to 24, wherein for an effective range of any one of the at least one parameter, the effective range of the parameter does not comprise an ambiguous value of the parameter, the ambiguous value referring to an inaccurate value.

**26.** The method according to any one of claims 19 to 25, further comprising:
transmitting configuration information, wherein the configuration information is used for configuring the effective interval.

**27.** The method according to any one of claims 19 to 26, wherein the sensing information is obtained based on a sensing signal that meets a quality requirement.

**28.** The method according to claim 27, wherein the quality requirement is determined according to at least one of following information: a reception quality of the sensing signal, a reception power of the sensing signal, or a line-of-sight probability of the sensing signal.

**29.** The method according to any one of claims 19 to 28, wherein the sensing information comprises: a value of the sensing information and/or a statistical result of the value of the sensing information.

**30.** The method according to any one of claims 19 to 29, wherein in a case where a number of sensing signals that meet a first condition is greater than an upper limit value N, the sensing information is obtained based on N sensing signals that meet the first condition, N being a positive integer; wherein the N sensing signals that meet the first condition are selected according to a priority principle, and the first condition comprises: sensing information obtained based on a sensing signal is within the valid interval.

**31.** The method according to claim 30, wherein the priority principle is determined according to at least one of following information: a reliability of a sensing signal, a reception quality of the sensing signal, a reception power of the sensing signal, a line-of-sight probability of the sensing signal, or a distance between the sensing signal and a center value.

32. The method according to any one of claims 19 to 31, wherein in a case where no sensing information is within the effective interval, the sensing information comprises an ineffective value, or the sensing information is not transmitted.

33. The method according to any one of claims 19 to 32, wherein the sensing information comprises: a measurement value of a sensing signal, or a quantized result of the measurement value of the sensing signal, or an interval index in which the measurement value of the sensing signal is located.

34. The method according to any one of claims 19 to 33, wherein the sensing information is determined based on sensing data within the effective interval.

35. The method according to any one of claims 19 to 34, wherein the sensing signal comprises at least one of an acoustic wave, an electromagnetic wave, or a light wave, and the sensing information comprises information about a target or environment obtained directly or indirectly based on the sensing signal.

36. An apparatus for transmitting sensing information, wherein the apparatus comprises:
a transmitting module configured to transmit sensing information within an effective interval, wherein the effective interval comprises an effective range of at least one parameter related to the sensing information.

37. An apparatus for receiving sensing information, wherein the apparatus comprises:
a receiving module configured to receive sensing information within an effective interval, wherein the effective interval comprises an effective range of at least one parameter related to the sensing information.

38. A device, wherein the device comprises a processor and a memory, wherein a computer program is stored in the memory, and the processor performs the computer program to perform the method according to any one of claims 1 to 18, or to perform the method according to any one of claims 19 to 35.

39. A computer-readable storage medium, wherein a computer program is stored in the storage medium, and the computer program is configured to be performed by a processor to perform the method according to any one of claims 1 to 18, or to perform the method according to any one of claims 19 to 35.

40. A chip, wherein the chip comprises a programmable logic circuit and/or program instructions, and when operating, the chip is configured to perform the method according to any one of claims 1 to 18, or to perform the method according to any one of claims 19 to 35.

41. A computer program product, wherein the computer program product comprises computer programs, the computer programs are stored in a computer-readable storage medium, and a processor reads the computer programs from the computer-readable storage medium and performs the computer programs to perform the method according to any one of claims 1 to 18, or to perform the method according to any one of claims 19 to 35.

FIG. 1

| Mode 1, a base station self-transmitting and self-receiving sensing | Mode 2, a terminal self-transmitting and self-receiving sensing |
|---|---|
| Sensing signal →<br>Base station ← Echo signal Sensing target | Sensing signal →<br>Terminal ← Echo signal Sensing target |
| Mode 3, a base station collaborative sensing | Mode 4, a terminal collaborative sensing |
| Base station A    Base station B<br>Sensing signal ↘ ↗ Echo signal<br>Sensing target | Terminal A    Terminal B<br>Sensing signal ↘ ↗ Echo signal<br>Sensing target |
| Mode 5, a base station-terminal collaborative sensing | Mode 6, a terminal-base station collaborative sensing |
| Base station    Terminal<br>Sensing Signal ↘ ↗ Echo signal<br>Sensing target | Terminal    Base station<br>Sensing signal ↘ ↗ Echo signal<br>Sensing target |
| Mode 7, a sensing target is a transmitting node of a sensing signal | Mode 8, a sensing target is a receiving node of a sensing signal |
| Sensing signal →<br>Transmitting node of sensing signal (Sensing target)    Receiving node of sensing signal | Sensing signal →<br>Echo signal<br>Transmitting Node of sensing signal    Receiving node of sensing signal (Sensing target) |

FIG. 2

31

or

Communication signal    Sensing node 3

Communication signal

Sensing target

Sensing signal

Sensing signal

Sensing node 1

Sensing signal

Sensing node 2

FIG. 3

A first node transmits sensing information within an effective interval    410

FIG. 4

FIG. 5

Distance (Unit: meter)

Flight time (unit: microsecond)

FIG. 6

| A second node receives sensing information within an effective interval | 710 |

FIG. 7

Channel estimation in time domain

FIG. 8

FIG. 9

1010

1000

Transmitting module

1020

Receiving module

FIG. 10

1110

1100

Receiving module

1120

Transmitting module

FIG. 11

Device 1200

Processor 1201

Transceiver 1202

Memory 1203

FIG. 12

## INTERNATIONAL SEARCH REPORT

| International application No. |
| --- |
| **PCT/CN2023/107093** |

**A. CLASSIFICATION OF SUBJECT MATTER**

H04W 28/06(2009.01)i; H04W 4/38(2018.01)i

According to International Patent Classification (IPC) or to both national classification and IPC

**B. FIELDS SEARCHED**

Minimum documentation searched (classification system followed by classification symbols)

IPC:H04W; H04L; H04M

Documentation searched other than minimum documentation to the extent that such documents are included in the fields searched

Electronic data base consulted during the international search (name of data base and, where practicable, search terms used)

CNTXT, ENTXT, ENTXTC, VEN, 3GPP: 感知信息, 感知数据, 感知结果, 上报, 发送, 传输, 参数, 范围, 区间, 有效, 符合, 匹配, 满足, perception, sensing, signal, data, report+, parameter, satisfy, range

**C. DOCUMENTS CONSIDERED TO BE RELEVANT**

| Category* | Citation of document, with indication, where appropriate, of the relevant passages | Relevant to claim No. |
| --- | --- | --- |
| X | CN 115915048 A (DATANG MOBILE COMMUNICATIONS EQUIPMENT CO., LTD.) 04 April 2023 (2023-04-04)<br>description, paragraphs 73-99 and 121-199, and figures 1-2 and 10-11 | 1-41 |
| X | CN 115914986 A (DATANG MOBILE COMMUNICATIONS EQUIPMENT CO., LTD.) 04 April 2023 (2023-04-04)<br>description, paragraphs 145-214, and figures 1-2 | 1-41 |
| A | CN 115811737 A (VIVO COMMUNICATION TECHNOLOGY CO., LTD.) 17 March 2023 (2023-03-17)<br>entire document | 1-41 |
| A | CN 116419144 A (VIVO COMMUNICATION TECHNOLOGY CO., LTD.) 11 July 2023 (2023-07-11)<br>entire document | 1-41 |
| A | WO 2023011564 A1 (HUAWEI TECHNOLOGIES CO., LTD.) 09 February 2023 (2023-02-09)<br>entire document | 1-41 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **01 March 2024** | **08 March 2024** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/107093** |

| C. | DOCUMENTS CONSIDERED TO BE RELEVANT | |
| --- | --- | --- |
| Category* | Citation of document, with indication, where appropriate, of the relevant passages | Relevant to claim No. |
| A | WO 2023071931 A1 (VIVO COMMUNICATION TECHNOLOGY CO., LTD.) 04 May 2023 (2023-05-04)<br>      entire document | 1-41 |

## INTERNATIONAL SEARCH REPORT
### Information on patent family members

| International application No. |
| --- |
| **PCT/CN2023/107093** |

| Patent document cited in search report | | | Publication date (day/month/year) | Patent family member(s) | | | Publication date (day/month/year) |
| --- | --- | --- | --- | --- | --- | --- | --- |
| CN | 115915048 | A | 04 April 2023 | None | | | |
| CN | 115914986 | A | 04 April 2023 | WO | 2023051673 | A1 | 06 April 2023 |
| CN | 115811737 | A | 17 March 2023 | WO | 2023040747 | A1 | 23 March 2023 |
| CN | 116419144 | A | 11 July 2023 | WO | 2023125154 | A1 | 06 July 2023 |
| WO | 2023011564 | A1 | 09 February 2023 | CN | 115706955 | A | 17 February 2023 |
| WO | 2023071931 | A1 | 04 May 2023 | CN | 116055015 | A | 02 May 2023 |

Form PCT/ISA/210 (patent family annex) (July 2022)